# EUROPÄISCHE PATENTANMELDUNG

(11) **EP 0 897 107 A2**
(43) Veröffentlichungstag der Anmeldung: **17.02.1999**
(21) Anmeldenummer: 98113747.4
(22) Anmeldetag: 23.07.1998
(51) Int. Cl.: G01M 17/02, G01M 1/22

(54) **Vorrichtung zur Messung der Gleichförmigkeit eines Fahrzeugreifens**

(30) Priorität: 12.08.1997 DE 19734904
(71) Anmelder: Buzzi, Carlo, 22054 MANDELLO DEL LARIO (COMO) (IT)
(72) Erfinder: Buzzi, Carlo, 22054 MANDELLO DEL LARIO (COMO) (IT)
(74) Vertreter: Nöth, Heinz, Dipl.-Phys.

(57) **Zusammenfassung**

Eine Vorrichtung zur Messung der Gleichförmigkeit eines Fahrzeugreifens 11 mit einem Drehlager 10 zur Drehlagerung des zu messenden Reifens, einem drehbar gelagerten Druckrad 7, das mit einer bestimmten Kraft an den zu messenden Reifen 11 in radialer Richtung zur Reifenachse andrückbar ist, einer Meßeinrichtung 19,20 zur Messung von Reaktionskräften in einer Berührungsfläche zwischen dem Druckrad 7 und dem abrollenden Reifen 11 und einer Antriebseinrichtung 22 zum Drehantrieb von Druckrad 7 und Reifen 11, wobei am Drehlager 10 eine Unwuchtmeßeinrichtung, welche von der Meßeinrichtung der Reaktionskräfte gebildet ist, vorgesehen ist.

## Beschreibung

Die Erfindung betrifft eine Vorrichtung zur Messung der Gleichförmigkeit eines Fahrzeugreifens nach dem Oberbegriff des Patentanspruches 1 oder des Patentanspruches 11.

Eine derartige Vorrichtung ist aus der DE 30 10 315 A1 bekannt.

Sowohl die Laufruhe eines Fahrzeugs als auch der Verschleiß verschiedener Fahrzeugteile werden von der Gleichförmigkeit bzw. Ungleichförmigkeit des Fahrzeugreifens beeinflußt. Ungleichförmigkeiten im Reifenaufbau führen zu Rundlaufabweichungen und Kraftschwankungen, die vom Reifen während des Fahrens verursacht werden. Es sind verschiedene Meßverfahren bekannt, um Ungleichförmigkeiten des Reifens festzustellen. Diese bestehen in der Unwuchtmessung, in der Messung von Höhen- und Seitenschlag, von Konus- und Winkeleffekt und ferner in der Messung von Radial-, Lateral- und Tangentialkraftschwankung. Diese Meßkriterien sind Standard zur Erfassung der Ungleichförmigkeiten eines Reifens.

Zur Bestimmung der Radial-, Lateral- und Tangentialkraftschwankungen sowie von Konus- und Winkeleffekt wird ein drehbar gelagertes Druckrad mit einer bestimmten Andrückkraft an den zu messenden Reifen in radialer Richtung zur Reifenachse angedrückt. Mit Hilfe einer Meßeinrichtung werden Reaktionskräfte gemessen, die in der Berührungsfläche zwischen dem Druckrad und dem daran abrollenden Reifen auftreten.

Zur Unwuchtmessung werden Fliehkräfte, welche aus der Reifen- bzw. Radunwucht resultieren, erfaßt und für einen Unwuchtausgleich ausgewertet.

Die in der gattungsbildenden DE 30 10 315 A1 gezeigte Vorrichtung ermöglicht sowohl die Erfassung der Reaktionskräfte zwischen Reifen und Druckrad, als auch die Erfassung der Fliehkräfte in einer Meßstation. Das Drehlager zur Drehlagerung des zu messenden Reifens bzw. Kraftfahrzeugrades wird mit Blattfedern, welche eine Parallellenkerführung bilden, am starren Maschinenrahmen auslenkbar abgestützt. Durch Meßwandler einer Meßeinrichtung werden die auf das Drehlager wirkenden Kräfte gemessen.

Aus der DE-AS 22 17 919 ist eine Reifenprüfvorrichtung, die nur zur Messung der Gleichförmigkeit eines Kraftfahrzeugreifens dient, bekannt, bei welcher der zu prüfende Reifen an der Mantelfläche einer Prüftrommel abgerollt wird. Der zu prüfende Reifen ist in einem Drehlager drehbar gelagert, wobei durch einen Drehzapfen eine senkrecht zur Drehachse der Drehlagerung verlaufende Schwenkachse und durch Schwenklager eine zweite, die erste Achse im rechten Winkel schneidende und tangential zur Mantelfläche der Prüftrommel verlaufende Achse gebildet wird. Die beiden Achsen schneiden sich im Zentrum der Reifenaufstandsfläche.

Aufgabe der Erfindung ist es, eine Vorrichtung der eingangs genannten Art zu schaffen, bei welcher die Messung der Gleichförmigkeit des Fahrzeugreifens mit verringertem Aufwand durchgeführt werden kann.

Diese Aufgabe wird bei der Vorrichtung gemäß dem Oberbegriff des Patentanspruches 1 durch die kennzeichnenden Merkmale des Patentanspruches 1 und bei der Vorrichtung gemäß dem Oberbegriff des Patentanspruches 11 durch die kennzeichnenden Merkmale des Patentanspruches 11 gelöst.

Zur Messung der Unwucht und der Reifengleichförmigkeit ist das Drehlager zur Drehlagerung des zu messenden Reifens in der Weise an einem starren Maschinenrahmen (Maschinenbett) abgestützt, daß es um eine zur Drehlagerachse senkrechte Torsionsachse schwenkbar und senkrecht zur Torsionsachse und Drehlagerachse auslenkbar abgestützt wird. Dies kann mit Hilfe von Federn, beispielsweise Blattfedern (US 4,445,372) oder Federstäben (DE 37 16 210 C2) oder eine andere geeignete Abstützung erfolgen, welche eine virtuelle Torsionsachse bzw. Schwenkachse oder einen Schwingungs- bzw. Bewegungsknotenpunkt bildet.

Hierzu kann die Torsionsachse parallel zur Richtung der Andrückkraft, mit welcher das Druckrad am Reifen angedrückt wird, verlaufen. In bevorzugter Weise erfolgt bei dieser Ausführungsform die Messung der Reaktionskräfte zwischen dem Druckrad und dem darauf abrollenden Reifen durch Meßgeber, die in der Achse des Druckrades, insbesondere zu beiden Seiten des Druckrades, angeordnet sind. Die Meßgeber sind bevorzugt als Zwei-Komponenten-Kraftmeßdosen ausgebildet.

Bei dieser Ausführungsform sind die Meßgeber, insbesondere Kraftwandler, zur Erfassung der Unwucht so angeordnet, daß die Krafteinleitung in die Kraftmeßwandler in einer Ebene erfolgt, die senkrecht zur Andrückrichtung und senkrecht zur virtuellen Torsionsachse, um welche das Drehlager des zu messenden Reifens schwenkbar gelagert ist, erfolgt.

Ferner ist bei einer weiteren Ausführungsform die Torsionsachse, um welche das Drehlager des Fahrzeugreifens schwenkbar gelagert ist, senkrecht zur Richtung der Andrückkraft, mit welcher das Druckrad am Reifen angedrückt wird, vorgesehen. Die Ebene, in welcher die Krafteinleitung in die Kraftmeßwandler erfolgt, liegt senkrecht zur Torsionsachse. Bei derart ausgebildeten Meßmaschinen können sowohl die Reaktionskräfte, welche zwischen dem Rad und dem daran abrollenden Reifen wirken, als auch bei vom Reifen losgelösten Druckrad die von einer Reifen- bzw. Radunwucht erzeugten Fliehkräfte mit ein und denselben Kraftmeßwandlern gemessen werden.

Die Anordnung der Meßwandler zwischen dem Drehlager für den Fahrzeugreifen und der starren Abstützung am Maschinenrahmen bzw. Maschinenbett ist so, daß von einem oder mehreren Meßwandlern Drehmomente bezüglich der Torsionsachse erfaßbar sind. Hierdurch können sowohl eine dynamische Unwucht beim Erfassen der Fliehkräfte als auch Lateralkräfte bei der Messung der Reaktionskräfte zwischen Druckrad und angedrücktem abrollenden Reifen erfaßt werden.

Ferner ist ein weiterer Meßwandler vorgesehen, der senkrecht zur Drehlagerachse und zur Torsionsachse gerichtete Kräfte mißt. Hierdurch können einerseits die Andruckkraft (Vorlast) zwischen Druckrad und zu messendem Reifen und andererseits Radialkräfte bei der Reaktionskraftmessung zwischen Druckrad und daran abrollendem Reifen und ferner bei der Fliehkraftmessung, d.h. bei vom Reifen gelöstem Druckrad, eine statische Unwucht erfaßt werden.

In bevorzugter Weise ist die Drehlagerung des zu messenden Reifens in der Mitte zwischen zwei Blattfedern, deren Blattfederflächen senkrecht verlaufen, am Maschinenrahmen über Abstützblöcke abgestützt. Die virtuelle Torsionsachse verläuft durch die Mitte der Blattfedern und liegt senkrecht zur Drehlagerachse.

Ferner können zusätzliche Meßeinrichtungen vorgesehen sein, welche geometrische Rundlaufabweichungen und Planlaufabweichungen am Fahrzeugreifen bzw. Fahrzeugrad berührend oder berührungslos abtasten.

Für den Antrieb des Reifens und des Druckrades kann ein herkömmlicher Antriebsmotor dienen, welcher über einen Riementrieb eine Spindel, an welcher der zu messende Reifen festgespannt ist und welche in der Drehlagerung gelagert ist, antreibt. Der Riementrieb erstreckt sich bevorzugt senkrecht zur Ebene, in welcher die Krafteinleitung der Kräfte in die Kraftmeßwandler, insbesondere bei der Unwuchtmessung, erfolgt. Die Unwuchtmessung und die Reaktionskraftmessung zwischen Druckrad und abrollendem Reifen können bei unterschiedlichen Drehzahlen stattfinden, z.B. die Unwuchtmessung bei ca. 300 bis 600 min⁻¹ und die Reaktionskraftmessung bei ca. 60 min⁻¹ oder mehr, um auch höhere Fahrgeschwindigkeiten simulieren zu können.

Anhand der Figuren wird an Ausführungsbeispielen die Erfindung noch näher erläutert. Es zeigt:
- Fig. 1a:: ein erstes Ausführungsbeispiel von vorne;
- Fig. 1b:: das Ausführungsbeispiel der Fig. 1a von der Seite;
- Fig. 2a:: ein zweites Ausführungsbeispiel von vorne;
- Fig. 2b:: das Ausführungsbeispiel der Fig. 2a von der Seite;
- Fig. 3a:: ein drittes Ausführungsbeispiel von vorne;
- Fig. 3b:: das Ausführungsbeispiel der Fig. 3a von der Seite;
- Fig. 4a:: ein viertes Ausführungsbeispiel von vorne;
- Fig. 4b:: das Ausführungsbeispiel der Fig. 4a von der Seite;
- Fig. 5a:: ein fünftes Ausführungsbeispiel in einer Ansicht von vorne;
- Fig. 5b:: das Ausführungsbeispiel der Fig. 5a in einer Seitenansicht;
- Fig. 5c:: das Ausführungsbeispiel der Figuren 5a und 5b in Draufsicht; und
- Fig. 6:: eine Auswerte- und Anzeigeeinrichtung für die bei der Messung von den Kraftmeßwandlern abgegebenen Signale.

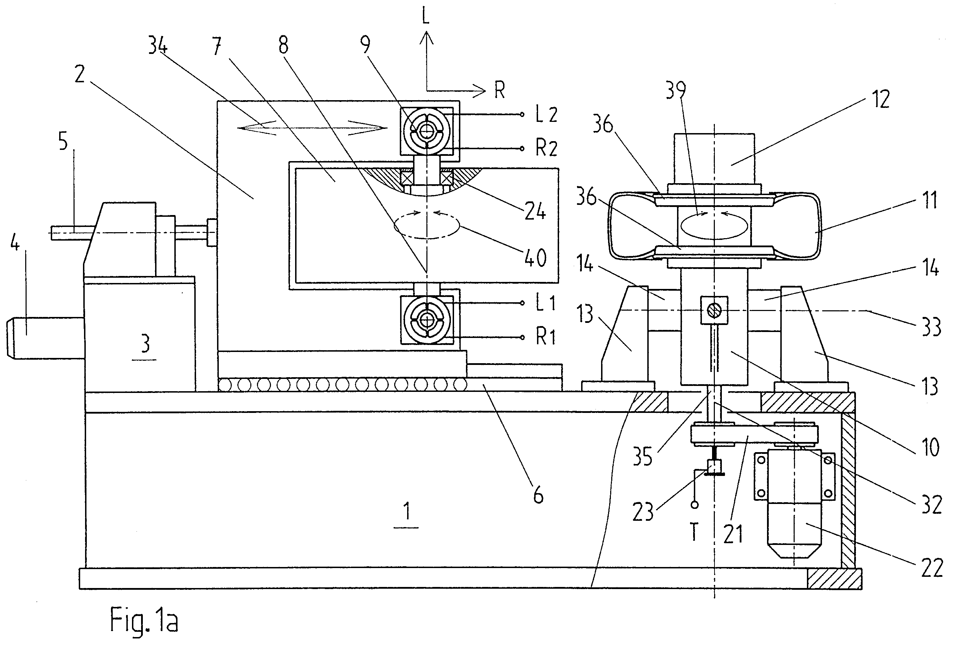

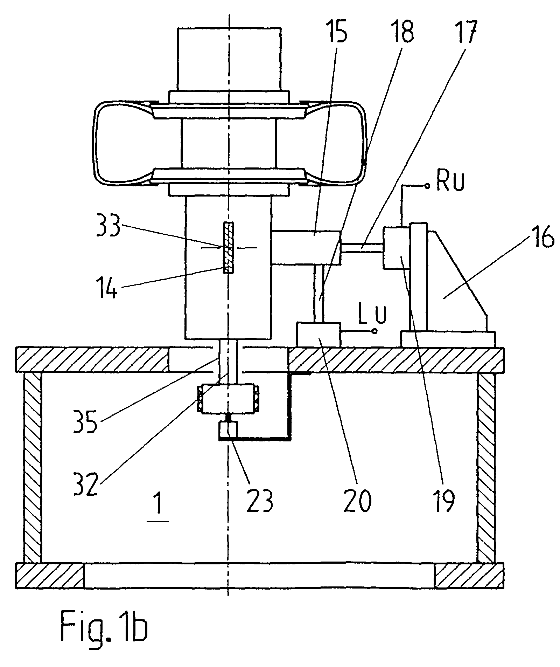

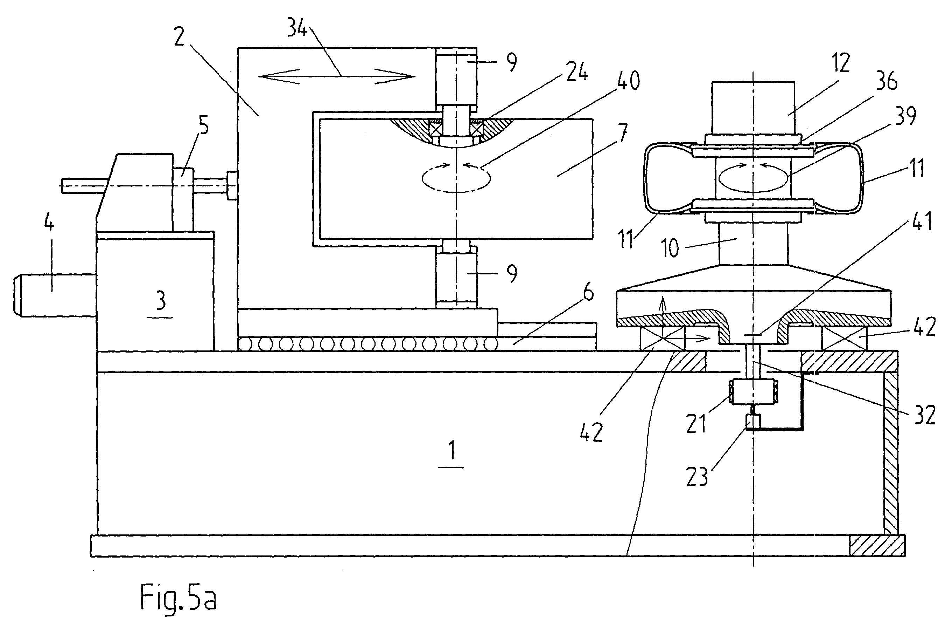

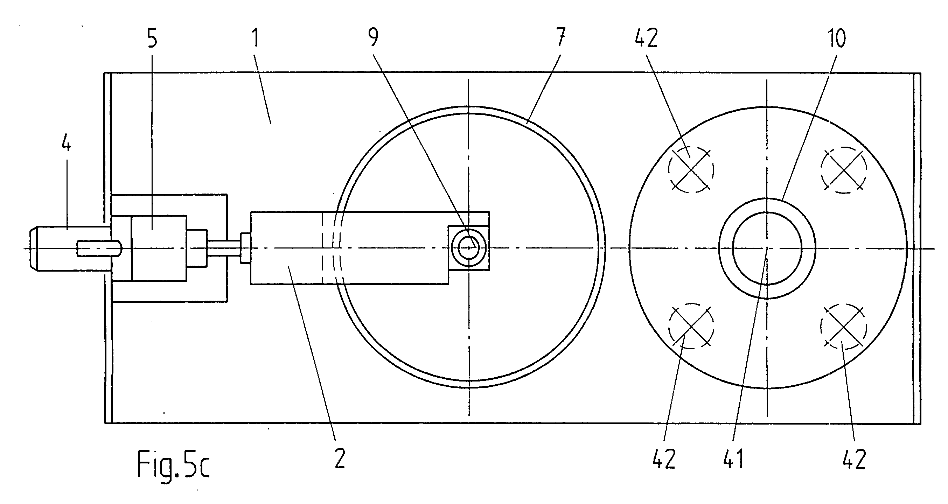

Bei den dargestellten Ausführungsbeispielen ist an einem Maschinenständer, welcher einen starren Rahmen 1 bildet, ein Schlitten 2 in horizontaler Richtung verschiebbar gelagert. Für die Verschiebung des Schlittens 2 in horizontaler Richtung (Doppelpfeil 34) dient ein von einem Motor 4 angetriebener Spindelantrieb 5. Der Motor 4 und der Spindelantrieb 5 sind an einem am Maschinenrahmen 4 befestigten Lagerbock 3 gelagert. Für die horizontale Bewegung (Doppelpfeil 34) des Schlittens 2 dient an der Oberseite des Maschinenrahmens 1 eine Rollenlagerführung 6. Am Schlitten 2 ist in beispielsweise als Wälzlager ausgebildeten Druckradlagern 24 ein Druckrad 7 um eine vertikal verlaufende Druckradachse 8 drehbar gelagert. Bei den Ausführungsbeispielen der Figuren 1a und 1b sowie 5a - c sind die Druckradlager 24 in den Kraftmeßelementen 9, welche insbesondere als Zwei-Komponenten-Kraftmeßelemente für Lateral- und Radialkräftemessung ausgebildet sind, abgestützt. Bei diesen Ausführungsbeispielen befinden sich die Kraftmeßelemente 9 in vorderen Enden des Schlittens 2.

Zur drehbaren Lagerung eines zu prüfenden Reifens 11, insbesondere Kraftfahrzeugreifens, dient ein als Spindellagerung ausgebildetes Drehlager 10. Im Drehlager 10 ist eine Spindel 35 drehbar gelagert. Drehfest mit der Spindel 35 ist eine Reifenzentriervorrichtung 12 verbunden, welche in bekannter Weise zwei Meßfelgenhälfte 36 aufweist, zwischen die der zu messende Reifen 11 eingespannt wird. Es ist jedoch auch möglich, ein Kraftfahrzeugrad, auf dessen Scheibenrad der Reifen 11 aufmontiert ist, zentriert an der Spindel 35 festzuspannen. Durch die zentrierte Lagerung des Reifens 11 bzw. Kraftfahrzeugrades an der Spindel 35 fällt die Reifenachse mit einer Drehlagerachse 32, welche die Spindelachse ist, zusammen.

Das Drehlager 10 ist am starren Maschinenrahmen 1 über zwei Stützlager 13, welche starr mit dem Maschinenrahmen 1 verbunden ist, abgestützt. Das Drehlager wird mit seiner Drehlagerachse 32 in der Mitte zwischen den beiden Stützlagern 13 mittels Federn 14, welche bei den Ausführungsbeispielen der Figuren 1 bis 4 eine virtuelle Torsionsachse 33 definieren, gehalten. Bei den Ausführungsbeispielen der Figuren 1 bis 4 sind die Federn 14 als Blattfedern ausgebildet, die beidseits das Drehlager 10 an den Stützlagern 13 abstützen. Die Abstützung des Drehlagers 10 am starren Maschinenrahmen 1 erfolgt so, daß es um die Torsionsachse 33 schwenkbar und senkrecht zu der von der Drehlagerachse 32 und der Torsionsachse 33 bestimmten Ebene auslenkbar ist.

In Auslenkrichtung (radialer Richtung) wirkende Kräfte werden von einem Kraftmeßelement 19 gemessen. Kräfte (Drehmomente), welche aus einer Schwenkbewegung um die Torsionsachse 33 resultieren, werden von einem Kraftmeßelement 20 gemessen. Die zu messenden Kräfte bzw. Drehmomente werden mittels eines Kraftübertragungselementes 15, welches starr ausgebildet ist und fest mit dem Drehlager 10 verbunden ist, über Kraftübertragungsbalken 17 und 18 in die Kraftmeßelemente 19 und 20 eingeleitet. Das Kraftmeßelement 19, welches im wesentlichen radial zur Drehlagerachse 32 gerichtete Kräfte aufnimmt, ist an einem starren Abstützbock 16 am Maschinenrahmen 1 abgestützt. Die durch die Kraftübertragungsbalken 17 und 18 sowie durch das gemeinsame Kraftübertragungselement 15 bestimmten Krafteinleitungsrichtungen in die Kraftmeßelemente 19, 20 liegen in einer Ebene, welche senkrecht zur Torsionsachse 33 verläuft und in welcher die Drehlagerachse 32 liegt.

Bei dem in den Figuren 5a bis c dargestellten Ausführungsbeispiel wird das Drehlager 10 über Kraftmeßelemente 42 am Maschinenrahmen 1 abgestützt. Die Kraftmeßelemente können in Form von runden Scheiben, insbesondere auf Piezobasis, vorliegen. Bevorzugt sind die Meßwandler 42 als Zwei-Komponenten-Kraftmeßelemente ausgebildet. Die Meßwandler 42 befinden sich in einer Ebene und stützen das Drehlager 10 gegenüber dem Maschinenrahmen 1 so ab, daß ein Bewegungsknotenpunkt 41 gebildet wird, um den für die Krafteinleitung in die Meßwandler 42 das Drehlager 10 am Maschinenrahmen 1 beweglich abgestützt ist. Die Meßwandler 42 befinden sich bevorzugt auf einem Kreis, wobei wenigstens drei Meßwandler und insbesondere vier Meßwandler vorgesehen sind, wie es im Ausführungsbeispiel (Fig. 5c) dargestellt ist. Die Meßwandler 42 besitzen gleiche Winkelabstände voneinander. Der Bewegungsknotenpunkt 41 befindet sich in der Drehlagerachse 32 des Drehlagers 10 und bildet den Mittelpunkt des Kreises, auf welchem die Meßwandler 42 angeordnet sind. Beim dargestellten Ausführungsbeispiel befinden sich die Meßwandler 42 in einer horizontalen Ebene.

Bei den Ausführungsbeispielen der Fig. 1a, 1b, 2a, 2b und 5a - c erfolgt der Antrieb mit Hilfe eines Antriebsmotors 22, welcher als Elektromotor ausgebildet sein kann. Mit Hilfe des Antriebsmotors 22 wird über einen Antriebsriemen 21 die Spindel 35 angetrieben.

In bevorzugter Weise verläuft der Riemenantrieb 21 senkrecht zu der Ebene, in welcher bei der Unwuchtmessung die Kräfte und Momente in die Kraftmeßelemente 19 und 20 eingeleitet werden, wie es in der Fig. 1a, 1b dargestellt ist. Ein Drehwinkelgeber 23, beispielsweise in Form eines Tachogenerators, erzeugt Drehwinkelsignale, welche proportional dem jeweiligen Drehwinkel der Spindel 35 und damit des zu messenden Reifens 11 bzw. Kraftfahrzeugrades sind.

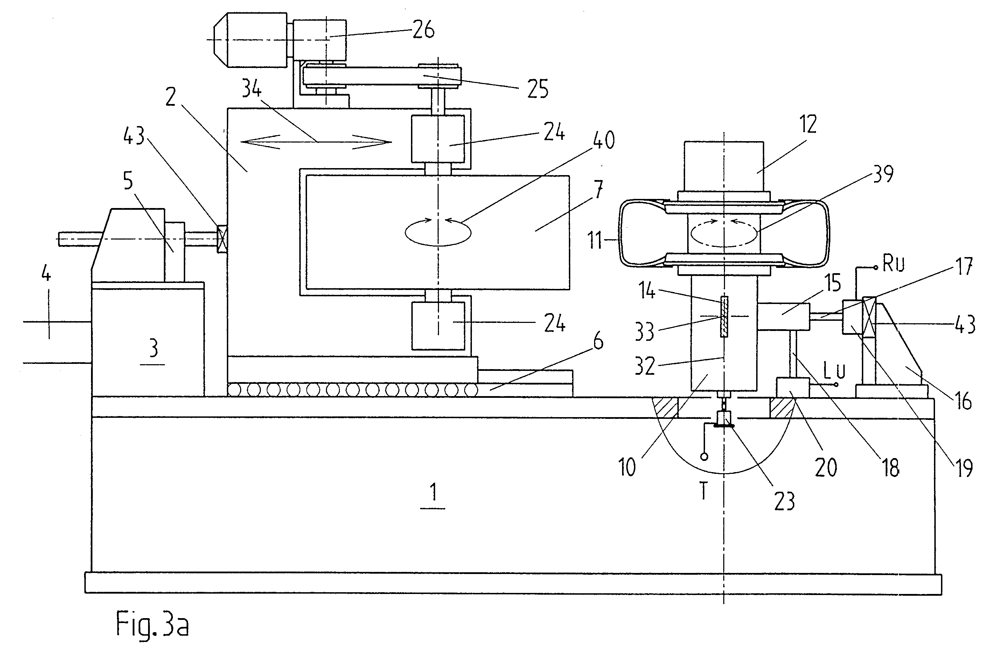

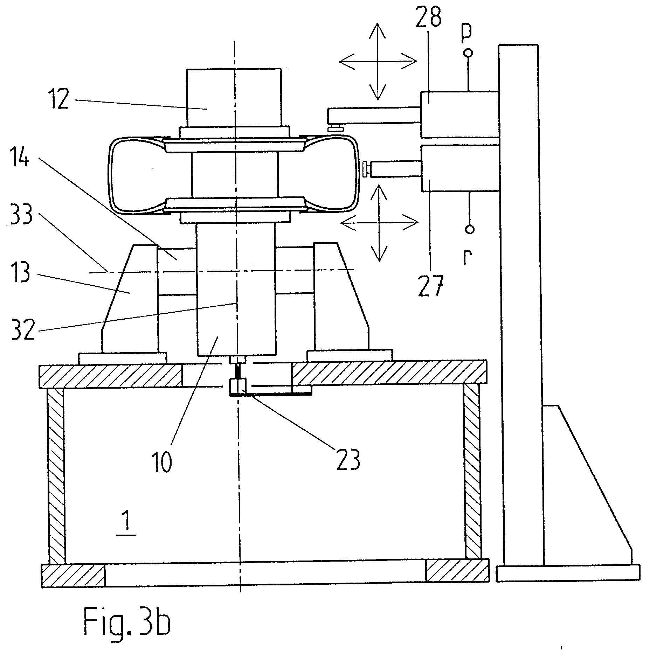

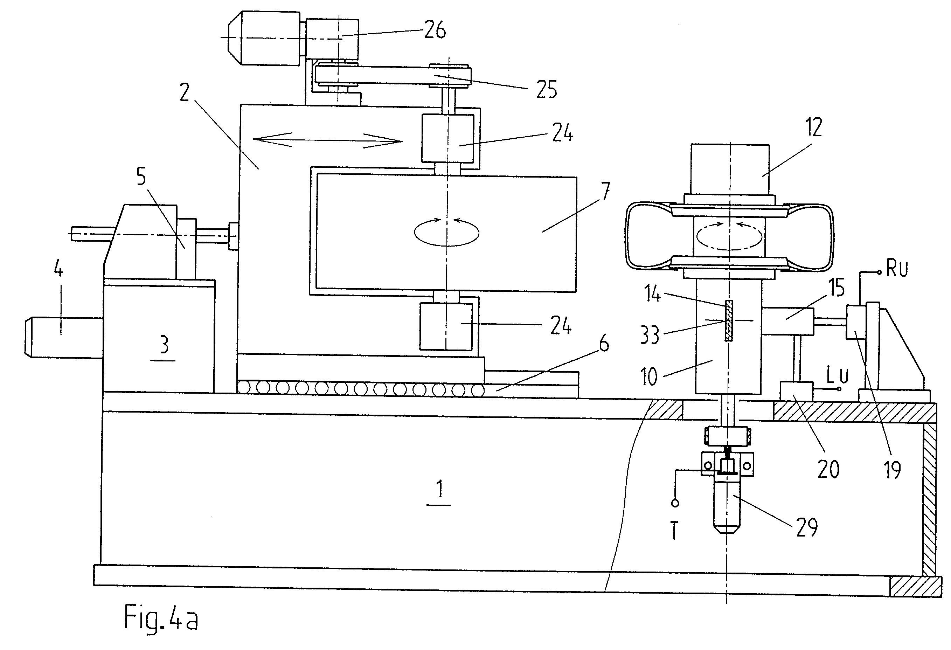

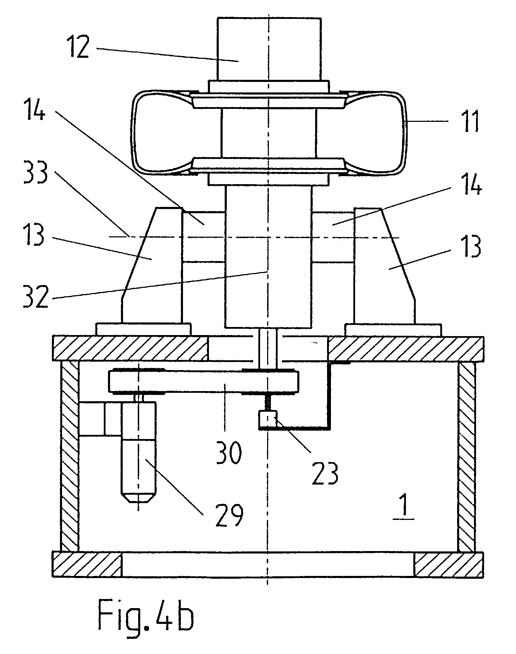

Bei den in den Fig. 3a, 3b und 4a, 4b dargestellten Ausführungsbeispielen wird das Druckrad 7 von einem Antriebsmotor 26 über einen Antriebsriemens 25 angetrieben. Wie aus der Fig. 3b zu ersehen ist, können Geomtriemeßeinrichtungen 27 und 28 vorgesehen sein, wobei die Geometriemeßeinrichtung 27 zur Messung eines Reifenhöhenschlages und die Geometriemeßeinrichtung 28 zur Messung eines Reifenseitenschlages dient. Die Geometriemeßeinrichtungen 27, 28 können berührend, beispielsweise in Form von auf den Reifen 11 aufgesetzten Rollen oder berührungslos die gewünschten Geometriemessungen durchführen.

Bei den Ausführungsbeispielen der Fig. 3a, 3b und 4a, 4b kann nach dem Hochdrehen auf Meßdrehzahl, z.B. ca. 300 bis 600 min⁻¹ die Unwuchtmessung im Auslauf nach dem Lösen des Druckrades 7 vom Reifen 11 durchgeführt werden. Um eine konstante Drehzahl aufrechtzuerhalten, kann, wie in Fig. 4a, 4b dargestellt ist, ein Hilfsantrieb 29, z.B. Elektromotor mit relativ geringer Leistung, vorgesehen sein, der über einen Antriebsriemen 30 die Spindel 35 antreibt.

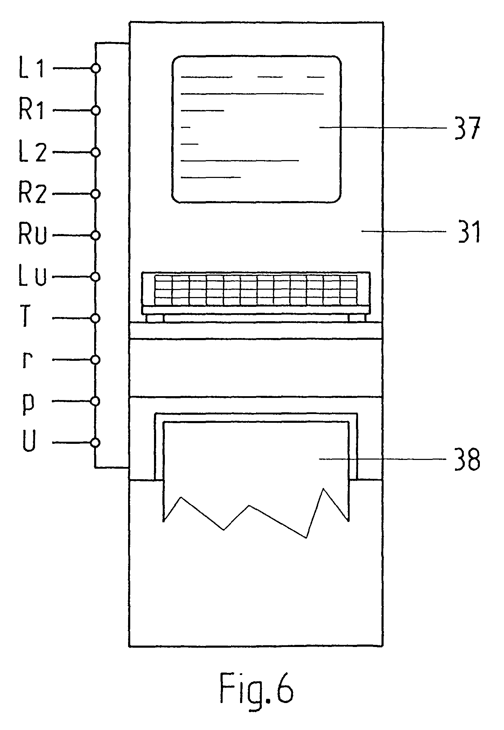

Die von den Kraftmeßelementen (Kraftmeßwandlern) gelieferten Signale werden in eine Auswerteeinrichtung 31 (Fig. 6) eingegeben. In der Auswerteeinrichtung werden die Meßsignale rechnergestützt ausgewertet und an einem Monitor 37 oder sonstigem Anzeigegerät sichtbar gemacht. Mit Hilfe eines Druckers 38 können die ausgewerteten Meßergebnisse, welche eine Aussage über die Gleichförmigkeit des Reifens geben, festgehalten werden.

Beim Messen von Reaktionskräften, welche zwischen dem Kraftfahrzeugrad bzw. dem Kraftfahrzeugreifen und der Fahrbahn auftreten, wird zur Fahrbahnsimulation das Druckrad 7 mit einer bestimmten Vorlast zur Simulierung des Fahrzeuggewichtes gegen den auf die Spindel 35 mit Hilfe der Zentriervorrichtung 12 aufgespannten Reifen 11 gedrückt. Dies erfolgt durch Betätigung des Spindelantriebes 5, so daß der Schlitten 2 verschoben und das darin drehbar gelagerte Druckrad 7 gegen den Reifen 11 angedrückt wird. Bei dem Ausführungsbeispiel der Fig. 1a, 1b kann die Messung bzw. Überprüfung der Andrückkraft (Vorlast) mit Hilfe der 2-Komponenten-Kraftmeßelemente 9 erfolgen. Die Andrückkraft kann auch durch einen zusätzlichen Meßgeber am Spindelantrieb 5 gemessen werden. Bei den Ausführungsformen der Fig. 1a, 1b, 2a, 2b und 5a - c erfolgt der Drehantrieb der Meßvorrichtung mit Hilfe des Antriebsmotors 22. Das Druckrad und der aufgesetzte Reifen 11 werden auf Prüfdrehzahl des Reifens bzw. Kraftfahrzeugrades, z.B. 60 min⁻¹ gebracht, und die Kraftmeßelemente 9 liefern Meßwerte für die anschließend in der rechnergestützten Auswerteeinrichtung durchgeführte Bestimmung der Lateralkraftschwankung und der Radialkraftschwankung. Die Messung erfolgt in beiden Drehrichtungen, wie es durch die Pfeile 39 und 40 angezeigt ist.

Auch bei den Ausführungsformen 3a, 3b und 4a, 4b erfolgt die Messung der Reaktionskräfte in der gleichen Weise, wobei der Antrieb durch den Antriebsmotor 26 vermittelt wird und über den Antriebsriemen 25 auf das Druckrad 7 übertragen wird.

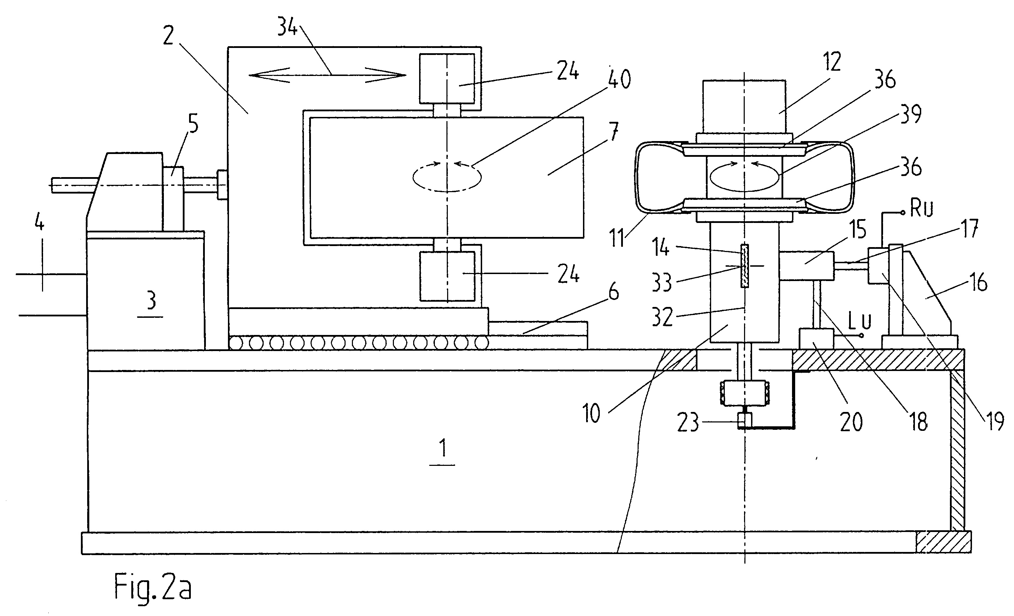

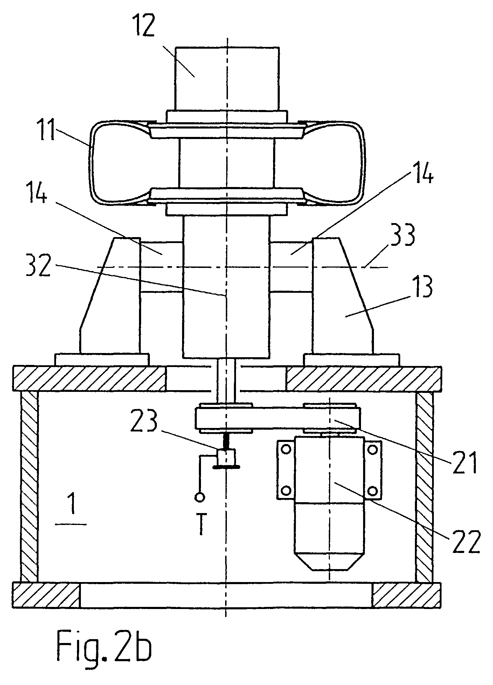

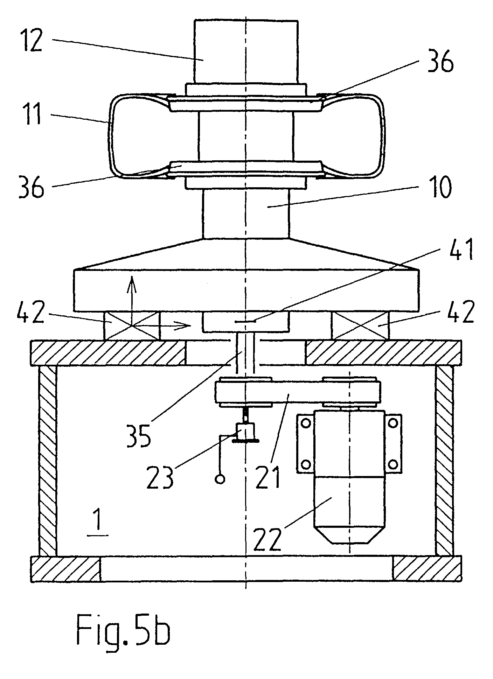

Bei den Ausführungsformen der Fig. 2a, 2b, 3a, 3b und 4a, 4b werden die Meßsignale für die Lateralkraftschwankung und die Radialkraftschwankung von den Kraftmeßelementen 19 und 20 gebildet. Das Kraftmeßelement 19 mißt die Kräfte für die Bestimmung der Radialschwankung und das Kraftmeßelement 20 mißt die Kräfte für die Bestimmung der Lateralkraftschwankung. Bei diesen Ausführungsbeispielen kann die Andrückkraft (Vorlast), mit welcher das Druckrad 7 an den Reifen 11 angedrückt wird, auch vom Kraftmeßelement 19 erfaßt werden. Beim Ausführungsbeispiel der Figuren 5a - c werden sowohl für die Unwuchtmessung als auch für die Messung der Lateral- und Radialkraftschwankung die Meßgeber 42 verwendet. Die Meßsignale für die Lateral- und Radialkräfte sind in Meßanordnungen wie in Fig. 1 mit L₁ und R₁ sowie L₂ und R₂ bezeichnet und werden der Auswerteeinrichtung 31 (Fig. 6) entsprechenden Eingängen zugeleitet. Bei Meßanordnungen wie in den Figuren 2 bis 4 ergibt sich jeweils ein Meßsignal für die Lateral- und Radialkraft, und bei einer Meßanordnung wie in Fig. 5 ergeben sich jeweils vier Meßsignale. In bekannter Weise (Automobilindustrie 2/71, Seiten 85 bis 90) werden die gemessenen Kräfte ausgewertet zur Bestimmung der Radial-, Lateral- und Tangentialkraftschwankung sowie zur Bestimmung des Konus- und Winkeleffektes.

Zur Messung der Reifen- bzw. Radunwucht wird das Druckrad 7 mit Hilfe des Spindelantriebes 5 in der Führung 6 vom Reifen 1 wegbewegt und von diesen gelöst. Bei den Ausführungsformen der Fig. 3a, 3b und 4a, 4b erfolgt die Unwuchtmessung nach dem Hochdrehen bis auf Meßdrehzahl im Auslauf des weiterrotierenden Reifens 11 bzw. Rades. Dabei werden die von der Reifen- bzw. Radunwucht an den Meßstellen verursachten Fliehkräfte gemessen. Für einen statischen Unwuchtausgleich genügt es, die vom Kraftmeßelement 19 aufgenommenen Kräfte R_{U} zu messen und entsprechende Meßsignale an den entsprechenden Eingang der Auswerteeinrichtung 31 zu liefern.

Für einen dynamischen Unwuchtausgleich werden die vom Kraftmeßelement 20 gemessenen Kräfte Lᵤ an einen entsprechenden Eingang der Auswerteeinrichtung 31 geliefert. Diese Kräfte entsprechen am Drehlager 10 bezüglich der Torsionsachse 33 wirkende Drehmomente.

Um die Meßdrehzahl bei der Unwuchtmessung konstant zu halten, kann der beim Ausführungsbeispielen der Fig. 4a, 4b gezeigte Hilfsantriebsmotor 29 verwendet werden, welcher über den Antriebsriemen 30 die Spindel 35 mit konstanter Drehzahl antreibt.

Sowohl bei der Reaktionskraftmessung als auch bei der Unwuchtmessung werden die gemessenen Kräfte drehwinkelabhängig und zwar bezogen auf den jeweiligen Drehwinkel des Reifens 11 bzw. Kraftfahrzeugrades ermittelt. Entsprechende Drehwinkelsignale T werden einem entsprechenden Eingang der Auswerteeinrichtung 31 zugeleitet. Da sowohl die Messung der Reaktionskräfte als auch die Messung der Unwucht drehwinkelbezogen durchgeführt wird, ist es möglich, mit dem erfindungsgemäßen Meßsystem den Unwuchtanteil in der Reaktionskraftmessung zu bestimmen und durch entsprechende Subtraktion zu eliminieren. Hierzu werden insbesondere die ersten Harmonischen in den Kraftschwankungsspektren, insbesondere bei der Radialkraftschwankung ermittelt. In bevorzugter Weise sind hierfür die Ausführungsformen der Fig. 2, 3, 4 und 5 geeignet.

Hierbei werden bei der Reaktionskraftmessung, insbesondere der Radialkraftmessung, die Meßsignale nach ihren harmonischen Anteilen analysiert und sowohl Betrag als auch Richtung der Harmonischen ermittelt und gegebenenfalls angezeigt. Aus der statischen Unwucht wird unter Verwendung der Drehzahl, bei welcher die Reaktionskraftmessung durchgeführt wurde, die entsprechende Fliehkraft ermittelt, und anschließend wird phasenrichtig diese Fliehkraft von der Reaktionskraft, insbesondere Radialkraft, subtrahiert.

Hieraus ergibt sich dann die tatsächliche Reaktionskraft, insbesondere Radialkraft, welche gegebenenfalls angezeigt und festgehalten wird.

Die Meßsignale der Geometriemeßeinrichtungen 27 und 28, welche die Randlaufabweichungen r und die Planlaufabweichungen p anzeigen, werden ebenfalls entsprechenden Eingängen der Auswerteeinrichtung 31 (Fig. 6) zugeführt.

Die Auswerteeinrichtung kann ein weiteres Ausgangssignal liefern, wenn das Druckrad 7 vom Reifen 11 gelöst wird, d.h. wenn von dem entsprechenden Kraftmeßelement keine Vorlast mehr gemessen wird. Durch dieses Signal kann dann die Auswerteeinrichtung von der Auswertung der bei der Reaktionskraftmessung gelieferten Signale auf die Auswertung der bei der Fliehkraftmessung gelieferten Signale umgeschaltet werden. Zur Messung der Vorlast kann ein zusätzlicher Meßgeber 43 am Spindeltrieb 5 und/oder am Abstützbock 16 vorgesehen sein, wie es in Fig. 3a dargestellt ist.

Auf diese Weise erreicht man durch diese Erfindung eine universelle Meßvorrichtung für die Gleichförmigkeitsmessung am Kraftfahrzeugreifen bzw. Kraftfahrzeugrädern.

## Patentansprüche

1. Vorrichtung zur Messung der Gleichförmigkeit eines Fahrzeugreifens mit einem Drehlager zur Drehlagerung des zu messenden Reifens, Federn, mit denen das Drehlager am starren Maschinenrahmen auslenkbar abgestützt ist, einem drehbar gelagerten Druckrad, das mit einer bestimmten Kraft an den zu messenden Reifen in radialer Richtung zur Reifenachse andrückbar ist, einer Meßeinrichtung zur Messung von Reaktionskräften, die in einer Berührungsfläche zwischen dem Druckrad und dem abrollenden Reifen auftreten, einer Antriebseinrichtung zum Drehantrieb von Druckrad und Reifen, und einer Unwuchtmeßeinrichtung, die von Fliehkräften des sich drehenden und vom Druckrad gelösten Reifens verursachte und am Drehlager wirkende Kräfte mißt,
dadurch **gekennzeichnet,**
daß das Drehlager (10) um eine zur Drehlagerachse (32) senkrechte von den Federn (14) gebildete Torsionsachse (33) schwenkbar und senkrecht zu einer von der Torsionsachse (33) und Drehlagerachse (32) bestimmten Ebene auslenkbar an einem starren Maschinenrahmen (1) abgestützt ist.

2. Vorrichtung nach Anspruch 1, dadurch gekennzeichnet, daß die Torsionsachse (33) parallel zur Richtung der Andrückkraft, mit welcher das Druckrad (7) am Reifen (11) angedrückt wird, verläuft.

3. Vorrichtung nach Anspruch 1, dadurch gekennzeichnet, daß die Torsionsachse (33) senkrecht zur Richtung der Andrückkraft, mit welcher das Druckrad (7) am Reifen (11) angedrückt wird, verläuft.

4. Vorrichtung nach Anspruch 3, dadurch gekennzeichnet, daß senkrecht zur Drehlagerachse (32) und/oder Torsionsachse (33) gerichtete Kräfte meßbar sind.

5. Vorrichtung nach Anspruch 4, dadurch gekennzeichnet, daß ferner Drehmomente bezüglich der Torsionsachse (33) meßbar sind.

6. Vorrichtung nach Anspruch 4, dadurch gekennzeichnet, daß wenigstens ein erster Meßwandler (19) senkrecht zur Drehlagerachse (32) und/oder Torsionsachse (33) gerichtete Kräfte mißt.

7. Vorrichtung nach Anspruch 5, dadurch gekennzeichnet, daß in wenigstens einen zweiten Meßwandler (20) Kräfte, welche bezüglich der Torsionsachse (33) Drehmomente am Drehlager erzeugen, einleitbar sind.

8. Vorrichtung nach Anspruch 6, dadurch gekennzeichnet, daß mittels des wenigstens einen ersten Meßwandlers (19) eine statische Unwucht und/oder Radialkräfte des Reifens (11) meßbar ist bzw. sind.

9. Vorrichtung nach Anspruch 7, dadurch gekennzeichnet, daß mittels des wenigstens einen zweiten Meßwandlers (20) eine dynamische Unwucht und/oder Lateralkräfte des Reifens (11) meßbar ist bzw. sind.

10. Vorrichtung nach einem der Ansprüche 1 bis 9, dadurch gekennzeichnet, daß die Richtungen der Einleitung der am Drehlager (10) wirkenden Kräfte in die Meßwandler (19,20) in einer zur Torsionsachse (33) senkrechten Ebene liegen.

11. Vorrichtung zur Messung der Gleichförmigkeit eines Fahrzeugreifens mit einem Drehlager zur Drehlagerung des zu messenden Reifens, einem drehbar gelagerten Druckrad, das mit einer bestimmten Kraft an den zu messenden Reifen in radialer Richtung zur Reifenachse andrückbar ist, einer Meßeinrichtung zur Messung von Reaktionskräften, die in einer Berührungsfläche zwischen dem Druckrad und dem abrollenden Reifen auftreten, einer Antriebseinrichtung zum Drehantrieb von Druckrad und Reifen, und einer Unwuchtmeßeinrichtung, die von Fliehkräften des sich drehenden und vom Druckrad gelösten Reifens verursachte und am Drehlager wirkende Kräfte mittels Meßwandler mißt, dadurch gekennzeichnet, daß das Drehlager (10) über die Meßwandler (42) um einen in der Drehlagerachse (32) liegenden Bewegungsknotenpunkt (41) beweglich am Maschinenrahmen (1) abgestützt ist.

12. Vorrichtung nach Anspruch 11, dadurch gekennzeichnet, daß die Meßwandler (42) in einer Ebene angeordnet sind.

13. Vorrichtung nach Anspruch 11 oder 12, dadurch gekennzeichnet, daß die Meßwandler (42) auf einem Kreis, insbesondere mit gleichen Winkelabständen voneinander um den Bewegungsknotenpunkt (41) bzw. die Drehlagerachse (32) angeordnet sind.

14. Vorrichtung nach einem der Ansprüche 11 bis 13, dadurch gekennzeichnet, daß wenigstens drei, insbesondere vier Meßwandler (42) vorgesehen sind.

15. Vorrichtung nach einem der Ansprüche 1 bis 14, dadurch gekennzeichnet, daß Geometriemeßeinrichtungen (27,28) zur Messung von Rundlauf- und Planlaufabweichungen des Reifens (11) vorgesehen sind.

16. Vorrichtung nach einem der Ansprüche 1 bis 11, dadurch gekennzeichnet, daß in Abhängigkeit von der Messung der Vorlast, mit welcher das Druckrad (7) an den Reifen (11) gedrückt wird, eine an die Meßeinrichtung (19, 20; 42) angeschlossene Auswerteeinrichtung (31) zwischen der Auswertung der Signale der Reaktionskraftmessung und der Auswertung der Signale der Fliehkraftmessung umschaltbar ist.

17. Vorrichtung nach Anspruch 16, dadurch gekennzeichnet, daß ein oder mehrere zusätzliche Meßgeber (43) zur Messung der statischen Radlast (Vorlast) vorgesehen ist bzw. sind.

18. Vorrichtung nach einem der Ansprüche 1 bis 17, dadurch gekennzeichnet, daß die Messung der Unwucht und die Messung der Reaktionskraftschwankung bei unterschiedlichen Drehzahlen erfolgt.

19. Vorrichtung nach einem der Ansprüche 1 bis 18, dadurch gekennzeichnet, daß die Meßsignale der Reaktionskraftmessung durch die Auswerteschaltung (31) nach ihren harmonischen Anteilen analysiert sind.

20. Vorrichtung nach einem der Ansprüche 1 bis 19, dadurch gekennzeichnet, daß aus der statischen Unwucht bei der für die Reaktionskraftmessung verwendeten Drehzahl die entsprechende Fliehkraft durch die Auswerteeinrichtung (31) bestimmt ist und daß diese Fliehkraft phasenrichtig von der Reaktionskraft, insbesondere Radialkraft, subtrahiert ist.
